# EUROPÄISCHE PATENTSCHRIFT

(11) **EP 3 476 650 B1**
(45) Veröffentlichungstag und Bekanntmachung des Hinweises auf die Patenterteilung: **26.01.2022**
(21) Anmeldenummer: 18185428.2
(22) Anmeldetag: 25.07.2018
(51) Int. Cl.: B60N 2/30, B60N 2/34, B60N 2/32

(54) **SITZGESTELL EINES FAHRZEUGSITZES**
SEAT FRAME OF A VEHICLE SEAT
REHAUSSE D'UN SIÈGE DE VÉHICULE

(30) Priorität: 24.10.2017 DE 102017124846
(43) Veröffentlichungstag der Anmeldung: 01.05.2019
(73) Patentinhaber: Aguti Produktentwicklung & Design GmbH, 88085 Langenargen (DE)
(72) Erfinder: Grieger, Iris, 88079 Kressbronn (DE)
(74) Vertreter: Otten, Roth, Dobler & Partner mbB Patentanwälte

(56) Entgegenhaltungen:
- DE-A1- 10 133 241
- DE-A1-102008 032 403
- DE-A1-102010 028 210
- DE-A1-102011 107 226
- DE-U1-202010 016 271
- US-A- 5 269 589

## Beschreibung

### Stand der Technik

Sitzgestelle für Fahrzeugsitze sind allgemein bekannt.

Bekannte Fahrzeugsitze umfassen ein rahmenartiges Sitzgestell, an welchem eine Sitzfläche und eine Rückenlehne angeordnet sind. Nachteilig an diesen Fahrzeugsitzen ist, dass diese Fahrzeugsitze im Fahrzeug nicht verstaubar sind, sodass eine Nutzfläche oder ein Nutzraum in einem Fahrzeuginnenraum erweitert ist.

Weiter ist eine Fahrzeugsitzbank bekannt, welche zu einem Fahrzeugsitz umbaubar ist, wobei eine Sitzrichtung des Fahrzeugsitzes einer Sitzrichtung der Fahrzeugsitzbank entspricht. Eine Fahrzeugsitzbank wird in der Regel mit einer Sitzrichtung quer zu einer Fahrtrichtung des Fahrzeugs am Fahrzeug angeordnet. Neueste Sicherheitsrichtlinien schreiben vor, dass eine Sitzrichtung eines Fahrzeugsitzes während der Fahrt in Fahrtrichtung vorhanden sein sind muss. Ein derartige Fahrzeugsitzbank ist beispielsweise aus der DE 10 2010 028 210 A1 bekannt.

### Aufgabe und Vorteile der Erfindung

Der Erfindung liegt die Aufgabe zugrunde, eine alternative Fahrzeugsitzbank mit einem Sitzgestell eines Fahrzeugsitzes bereitzustellen.

Die Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Fahrzeugsitzbank mit einem Sitzgestell eines Fahrzeugsitzes aus, wobei das Sitzgestell ein Rahmenelement für eine Sitzfläche, eine Anbringungseinrichtung für eine Rückenlehne und ein Anbindungsorgan für ein Gurtsystem umfasst, wobei das Sitzgestell an eine Fahrzeugsitzbank anordenbar ist.

Bevorzugterweise ist das Sitzgestell als ein Sitzgestell eines Wohnmobils, eines Reisemobils, eines Wohnwagens und/oder ein Caravans ausgebildet. Die Fahrzeugsitzbank ist vorteilhafterweise als eine Sitz- und/oder Liegebank eines Wohnmobils, eines Reisemobils, eines Wohnwagens und/oder ein Caravans ausgebildet, insbesondere als eine Wohnmobilsitzbank. Die Fahrzeugsitzbank ist beispielsweise derart am Wohnmobil anordenbar, dass eine Sitzrichtung der Fahrzeugsitzbank in Fahrtrichtung und/oder quer zur Fahrtrichtung des Fahrzeugs bzw. des Wohnmobils vorhanden ist.

Der wesentliche Aspekt der Erfindung ist darin zu sehen, dass das Sitzgestell als ein bewegliches Sitzgestell vorhanden und derart ausgebildet ist, unterhalb einer Sitzfläche einer Fahrzeugsitzbank versetzbar angeordnet zu sein, sodass durch Versetzen des Sitzgestells das Sitzgestell freigestellt werden kann und ein Fahrzeugsitz realisierbar ist, wobei die Anbringungseinrichtung für die Rückenlehne am Sitzgestell aufsteckbar und/oder ansteckbar ist. Hierdurch ist das Sitzgestell und vorteilhafterweise mit dem Sitzgestell auch verbleibende Elemente des Fahrzeugsitzes verstaubar vorhanden.

Das Sitzgestell ist bevorzugterweise ausgebildet, unter einer Sitz- und/oder Liegefläche der Fahrzeugsitzbank ausziehbar anordenbar zu sein. Der durch das Sitzgestell realisierbare Fahrzeugsitz ist insbesondere ein vollständiger Fahrzeugsitz mit entsprechenden vorschriftsmäßigen Sicherungssystemen.

Unter einem beweglichen Sitzgestell, insbesondere unter einem versetzbaren Sitzgestell, ist zu verstehen, dass das Sitzgestell linear verschiebbar und/oder um eine Rotationsachse schwenkbar und/oder drehbar gelagert vorhanden sein kann. Ebenfalls ist es vorstellbar, dass die Rotationsachse, an welcher das Sitzgestell beweglich gelagert ist selbst beweglich vorhanden ist. Hierdurch ist beispielsweise eine Schwenk-Drehbewegung des Sitzgestells realisierbar.

Weiter wird vorgeschlagen, dass das Sitzgestell als eine Art Schublade einer Fahrzeugsitzbank, insbesondere einer Fahrzeugseitenbank ausgebildet ist. Beispielsweise ist das Sitzgestell als eine Fahrzeugsitzbankschublade oder Fahrzeugseitenbankschublade vorhanden. Denkbar ist auch, dass das Sitzgestell als ein Fach einer Fahrzeugsitzbank, z.B. als ein Fahrzeugsitzbankfach, vorhanden ist.

Die Fahrzeugseitenbank ist am Fahrzeug mit einer Sitzrichtung quer zur Fahrtrichtung des Fahrzeugs am Fahrzeug angeordnet. Vorteilhafterweise ist das Sitzgestell in Sitzrichtung der Fahrzeugsitzbank, insbesondere der Fahrzeugseitenbank, und/oder in Fahrtrichtung des Fahrzeugs bewegbar vorhanden. Vorteilhafterweise ist das Sitzgestell bewegbar, insbesondere versetzbar, beispielsweise verschiebbar an die Fahrzeugsitzbank anordenbar. Bevorzugterweise ist am Sitzgestell und/oder an der Fahrzeugsitzbank ein Ausziehsystem vorhanden. Zum Beispiel ist die Fahrzeugsitzbank bewegbar, insbesondere versetzbar, beispielsweise verschiebbar an das Sitzgestell und/oder an das Fahrzeug anordenbar, sodass die Fahrzeugsitzbank relativ zum Sitzgestell bewegbar vorhanden ist. Beispielsweise ist das Sitzgestell und/oder die Fahrzeugsitzbank entlang eines Schienenelements verschieblich.

Auch ist es von Vorteil, dass das Sitzgestell, insbesondere das Rahmenelement für die Sitzfläche des Sitzgestells, kastenförmig ausgebildet ist. Beispielsweise ist das Sitzgestell, insbesondere das Rahmenelement für die Sitzfläche rechteckig. Vorteilhafterweise ist am Rahmenelement für die Sitzfläche das Ausziehsystem vorhanden. Das Rahmenelement für die Sitzfläche ist beispielsweise als ein Rahmengestell vorhanden.

Vorteilhafterweise ist das Sitzgestell in einem Verstauzustand an der Fahrzeugsitzbank kastenförmig oder rechteckig vorhanden. Im Verstauzustand ist das Sitzgestell vorteilhafterweise bewegbar, insbesondere versetzbar beispielsweise unterhalb einer Fahrzeugsitzbank anordenbar. Das Sitzgestell, insbesondere das Rahmenelement für die Sitzfläche des Sitzgestells, ist im Verstauzustand beispielsweise als eine Box oder als eine Schublade ausgebildet.

Beispielsweise umfasst das Sitzgestell neben dem Rahmenelement für die Sitzfläche und der Anbringungseinrichtung für die Rückenlehne ein weiteres Rahmenelement. Das weitere Rahmenelement ist beispielsweise kastenförmig oder boxartig vorhanden. Insbesondere ist das weitere Rahmenelement als eine Box oder eine Schublade ausgebildet. Denkbar ist beispielsweise, dass das Rahmenelement für die Sitzfläche und die Anbringungseinrichtung am weiteren Rahmenelement anordenbar sind. Vorteilhafterweise sind das Rahmenelement für die Sitzfläche und/oder die Anbringungseinrichtung in einem Aufnahmebereich des weiteren Rahmenelements verstaubar, insbesondere derart, dass das weitere Rahmenelement im Verstauzustand unter einer Sitzfläche einer Fahrzeugsitzbank anordenbar ist. Vorteilhafterweise sind die Rahmenelemente und die Anbringungseinrichtung miteinander verbindbar und/oder beweglich verbunden.

Weiter wird vorgeschlagen, dass das Sitzgestell in einer Weise ausgebildet ist, dass sich nach einem Versetzen des an die Fahrzeugsitzbank angeordneten Sitzgestells, eine Sitzfläche und eine Rückenlehne an das Sitzgestell anordnen lassen, sodass ein Fahrzeugsitz realisiert ist, wobei im realisierten Zustand des Fahrzeugsitzes eine Sitzrichtung des Fahrzeugsitzes in Fahrtrichtung eines Fahrzeugs, welches den Fahrzeugsitz umfasst, ausgerichtet ist. Dadurch ist ein normen-konformer Fahrzeugsitz realisierbar. Die Sitzfläche und die Rückenlehne sind beispielsweise als eine Klappeinheit am Sitzgestell vorhanden, insbesondere angelenkt. Zum Beispiel sind die Sitzfläche und/oder die Rückenlehne nach einem Versetzen des Sitzgestells relativ zur Fahrzeugbank am Sitzgestell klappbar, insbesondere ausklappbar vorhanden, sodass ein Fahrzeugsitz realisierbar ist.

Vorstellbar ist auch, dass das Rahmenelement für die Sitzfläche die Sitzfläche umfasst und/oder dass die Anbringungseinrichtung für die Rückenlehne die Rückenlehne umfasst. Beispielsweise ist das Rahmenelement für die Sitzfläche und die Sitzfläche einteilig vorhanden. Zum Beispiel ist die Anbringungseinrichtung für die Rückenlehne und die Rückenlehne einteilig ausgebildet. Vorteilhafterweise ist ein Anbindungsorgan des Gurtsystems mit der Anbringungseinrichtung der Rückenlehne verbunden. Vorstellbar ist auch, dass ein insbesondere weiteres Anbindungsorgan des Gurtsystems am Rahmenelement und/oder an der Anbringungseinrichtung anordenbar ist, beispielsweise fixiert ist.

Außerdem ist es von Vorteil, dass das Sitzgestell in einer Weise ausgebildet ist, dass die Anbringungseinrichtung für die Rückenlehne, das Anbindungsorgan für das Gurtsystem, die Sitzfläche, die Rückenlehne und/oder das Gurtsystem darin verstaubar sind. Hierdurch ist ein Nutzraum des Fahrzeugs, an welchem das Sitzgestell vorhanden ist, erweiterbar. Beispielsweise ist das Rahmenelement für die Sitzfläche und/oder das weitere Rahmenelement in einer Weise ausgebildet, dass das Rahmenelement für die Rückenlehne, das Anbindungsorgan für das Gurtsystem, die Sitzfläche, die Rückenlehne und/oder das Gurtsystem darin verstaubar sind. Zum Beispiel ist das Rahmenelement für die Rückenlehne, das Anbindungsorgan für das Gurtsystem, die Sitzfläche, die Rückenlehne und/oder das Gurtsystem in einem Hohlraum des Rahmenelements für die Sitzfläche und/oder einem Hohlraum des weiteren Rahmenelements insbesondere vollständig verstaubar. Vorteilhafterweise ist das Rahmenelement für die Sitzfläche im weiteren Rahmenelement, insbesondere im Hohlraum des weiteren Rahmenelements verstaubar.

Überdies ist es von Vorteil, dass das Sitzgestell derart ausgebildet ist, dass das Sitzgestell im angeordneten und versetzten Zustand an der Fahrzeugsitzbank in einer Weise vorhanden ist, dass eine Sitz- und/oder Liegefläche der Fahrzeugsitzbank vergrößert ist. Beispielsweise ist im versetzten Zustand des Sitzgestells die Sitzfläche des Fahrzeugsitzes des Sitzgestells derart vorhanden, dass die Sitzfläche des Fahrzeugsitzes einen insbesondere zusätzlichen Teil der Sitz- und/oder Liegefläche der Fahrzeugsitzbank bildet.

Ebenfalls ist es vorteilhaft, dass die Anbringungseinrichtung für die Rückenlehne und/oder das Rahmenelement für die Sitzfläche ausschwenkbar am Sitzgestell vorhanden ist. Hierdurch ist ein Bedienungskomfort vergleichsweise erhöht. Vorteilhafterweise ist die Anbringungseinrichtung für die Rückenlehne und/oder das Rahmenelement für die Sitzfläche ausziehbar, schwenkbar und/oder versenkbar am Sitzgestell, insbesondere am weiteren Rahmenelement und/oder am Rahmenelement für die Sitzfläche, vorhanden. Denkbar ist auch, dass das Rahmenelement für die Sitzfläche am Sitzgestell aufsteckbar und/oder ansteckbar ist. Beispielsweise ist das Rahmenelement für die Sitzfläche und/oder die Anbringungseinrichtung für die Rückenlehne am Sitzgestell, insbesondere am weiteren Rahmenelement lösbar fixierbar vorhanden.

Außerdem wird vorgeschlagen, dass das Sitzgestell ein Verankerungselement aufweist, um das Sitzgestell im versetzten Zustand an der Fahrzeugsitzbank und/oder am Fahrzeug zu fixieren. Hierdurch ist das Sitzgestell beispielsweise vorschriftsmäßig, insbesondere normenkonform am Fahrzeug festlegbar.

Eine vorteilhafte Ausbildungsform der Erfindung ist eine Fahrzeugsitzbank mit einem Sitzgestell nach einer der voran genannten Varianten.

Von Vorteil erweist sich, dass das Sitzgestell in einer Richtung senkrecht und/oder parallel zur Sitzrichtung der Fahrzeugsitzbank an der Fahrzeugsitzbank ausziehbar vorhanden ist. Beispielsweise ist die Fahrzeugsitzbank als eine Seitenbank, insbesondere ein Fahrzeugseitenbank ausgebildet. Eine Sitzrichtung der Seitenbank ist senkrecht zur Fahrtrichtung des Fahrzeugs vorhanden. Beispielsweise besitzt die Seitenbank ein Sitzgestell, welches senkrecht und/oder parallel zur Sitzrichtung der Seitenbank in Fahrtrichtung ausziehbar an der Seitenbank vorhanden ist. Vorteilhafterweise ist das Sitzgestell parallel zu einer Sitzebene der Fahrzeugsitzbank oder parallel zum Fahrzeugboden bewegbar vorhanden.

Eine vorteilhafte Modifikation der Fahrzeugsitzbank ist, dass die Fahrzeugsitzbank in einer Weise ausgebildet ist, dass statt dem Sitzgestell die Fahrzeugsitzbank versetzbar vorhanden ist. Beispielsweise ist die Fahrzeugsitzbank versetzbar an das Fahrzeug anordenbar und relativ zum Sitzgestell, insbesondere zum Sitzgestell der Fahrzeugsitzbank, bewegbar vorhanden.

Vorteilhafterweise entspricht im Fall, dass die Fahrzeugsitzbank statt dem Sitzgestell versetzbar vorhanden ist, das Sitzgestell einer der vorgenannten Varianten, einzig mit dem Unterschied, dass statt dem Sitzgestell die Fahrzeugsitzbank relativ zum Fahrzeug bewegbar ist, um mit dem Sitzgestell einen Fahrzeugsitz zu realisieren. Hierbei ist das Sitzgestell an die Fahrzeugsitzbank anordenbar oder die Fahrzeugsitzbank kann das Sitzgestell umfassen.

Beispielsweise bildet zumindest ein Teil einer Sitzfläche der Fahrzeugsitzbank die Sitzfläche und/oder das Rahmenelement der Sitzfläche des Fahrzeugsitzes, welcher sich durch das an die Fahrzeugsitzbank anordenbare Sitzgestell realisieren lässt.

Vorstellbar ist weiterhin, dass die an das Sitzgestell anordenbare Rückenlehne und/oder die Sitzfläche des Sitzgestells als ein Sitzpolster der Fahrzeugsitzbank vorhanden ist.

### Beschreibung mehrerer Ausführungsbeispiele

Mehrere Ausführungsbeispiele werden anhand der nachstehenden Zeichnungen unter Angabe weiterer Einzelheiten und Vorteile näher erläutert.

### Es zeigen:

- Figur 1: Eine Seitenansicht einer Fahrzeugsitzbank mit angeordnetem, verstautem Sitzgestell,
- Figur 2: eine Draufsicht auf die Fahrzeugsitzbank aus Figur 1,
- Figur 3: eine Draufsicht auf die Fahrzeugsitzbank aus Figur 1 mit ausgezogenem Sitzgestell nach einer ersten Variante,
- Figur 4: eine Seitenansicht der Fahrzeugsitzbank aus Figur 3 mit am Sitzgestell angeordneter Sitzfläche und aufsteckbarer Rückenlehne,
- Figur 5: eine Frontansicht der Variante nach Figur 4,
- Figur 6: eine Draufsicht der Fahrzeugsitzbank aus Figur 1 mit ausgezogenem Sitzgestell nach einer zweiten Variante,
- Figur 7: eine Seitenansicht der Fahrzeugsitzbank aus Figur 6 mit am ausgezogenen Sitzgestell austeckbarer Sitzfläche und Rückenlehne,
- Figuren 8: bis 10 eine Frontansicht der Fahrzeugsitzbank nach der zweiten Variante in verschiedenen Montagepositionen der Sitzfläche und der Rückenlehne,
- Figur 11: eine Draufsicht der Fahrzeugsitzbank aus Figur 1 mit ausgezogenem Sitzgestell nach einer weiteren Variante,
- Figur 12: eine Seitenansicht der Fahrzeugsitzbank aus Figur 11 mit am ausgezogenen Sitzgestell angeordneter Sitzfläche und ausziehbarer Rückenlehne und
- Figuren 13: bis 14 eine Frontansicht der Fahrzeugsitzbank nach der weiteren Variante nach Figur 11 in verschiedenen Montagepositionen der Rückenlehne.

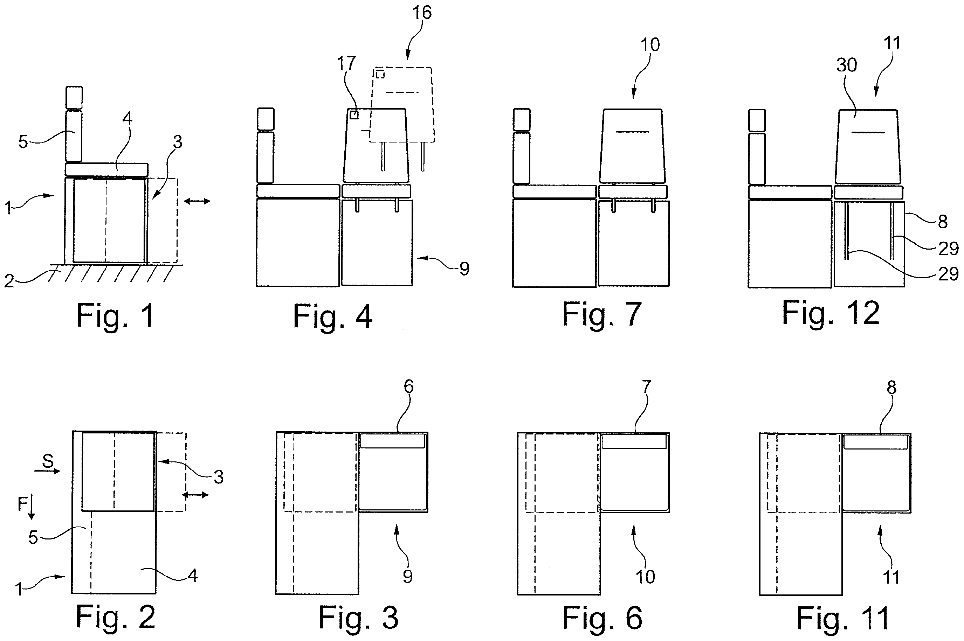

Figuren 1 und 2 zeigen eine Fahrzeugsitzbank 1, welche an einem Fahrzeugboden 2 eines Fahrzeugs angeordnet ist. An der Fahrzeugsitzbank 1 ist ein Sitzgestell 3 angeordnet. Das Sitzgestell 3 ist in Figur 1 in einem an der Fahrzeugsitzbank 1 verstauten Zustand gezeigt. Das Sitzgestell 3 ist unterhalb einer Sitz- und/oder Liegefläche 4 der Fahrzeugsitzbank 1 im verstauten Zustand vorhanden. In Figur 2 ist eine Rückenlehne 5 der Fahrzeugsitzbank 1 und die Sitz- und/oder Liegefläche 4 teilweise transparent dargestellt, um das Sitzgestell 3 zu zeigen.

Eine Sitzrichtung S der Fahrzeugsitzbank 1 ist vorteilhafterweise senkrecht zu einer Fahrtrichtung F des Fahrzeugs, an welches die Fahrzeugsitzbank 1 und das Sitzgestell 3 anordenbar sind, ausgebildet. Die Fahrzeugsitzbank 1 ist vorteilhafterweise als eine Fahrzeugseitenbank vorhanden (Figur 2).

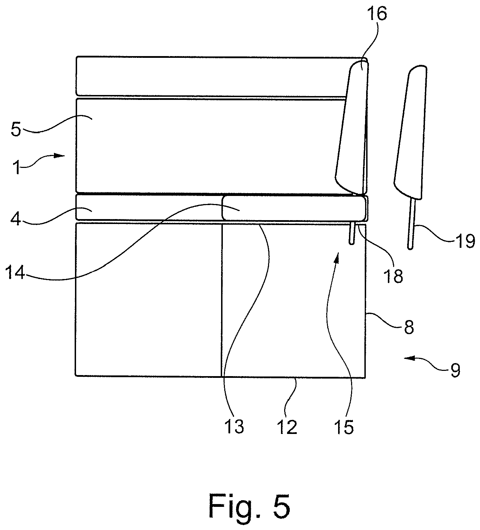

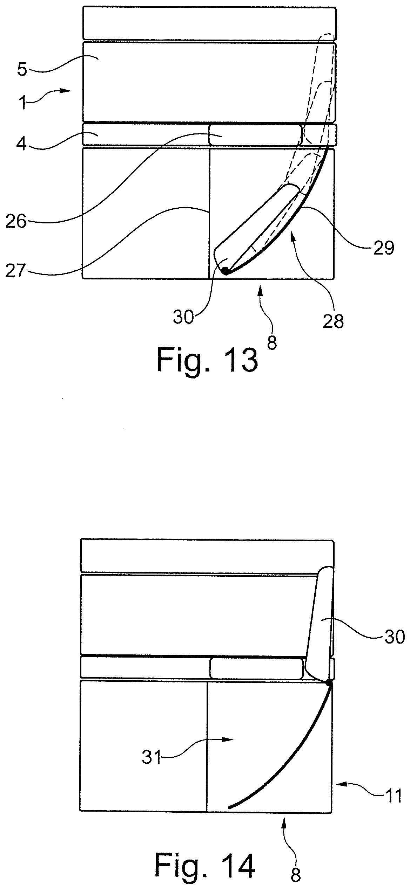

In den Figur 3 bis 5 ist eine erste Variante eines Sitzgestells 6 gezeigt, in den Figuren 6 bis 10 ist eine zweite Variante eines Sitzgestells 7 und in den Figuren 11 bis 14 eine weitere Variante eines Sitzgestells 8 dargestellt. Im Folgenden werden zur leichteren Verständlichkeit die gleichen Bezugszeichen für die Fahrzeugsitzbank 1 und Komponenten der Fahrzeugsitzbank 1 verwendet. Vorstellbar ist, dass die in den einzelnen Varianten der Figuren 3 bis 14 gezeigten Fahrzeugsitzbänke nicht gleich ausgebildet sind.

In den Figuren 3, 6, 7 sind die vorangegangen genannten verschiedenen Varianten der Sitzgestelle 6 bis 8 in einer Draufsicht auf die Fahrzeugsitzbank 1 dargestellt. Die Sitzgestelle 6 bis 8 sind in Sitzrichtung S versetzt zur Fahrzeugsitzbank 1 vorhanden, sodass ein Fahrzeugsitz 9 bis 11 realisiert ist.

Das Sitzgestell 6 nach der ersten Variante des Sitzgestells 6 umfasst ein weiteres Rahmenelement 12, welches kastenförmig vorhanden ist. Auf dem weiteren Rahmenelement 12 ist ein Rahmenelement 13 für eine Sitzfläche 14 des Fahrzeugsitzes 9 angeordnet. Das weitere Rahmenelement 12 und das Rahmenelement 13 für die Sitzfläche 14 können auch einstückig vorhanden sein. Außerdem ist eine Anbringungseinrichtung 15 zur Anbringung einer Rückenlehne 16 des Fahrzeugsitzes 9 vorhanden. In der ersten Variante des Sitzgestells 6 ist die Sitzfläche 14 auf dem Rahmenelement 13 anbringbar und die Rückenlehne 16 aus einer Richtung von oben, in Richtung Fahrzeugboden 2, an ein Anbringorgan 18 der Anbringungseinrichtung 15 aufsteckbar bzw. einsteckbar und/oder einschiebbar ausgebildet. Die Rückenlehne 16 umfasst hierzu vorteilhafterweise ein Steckelement 19, welches an das Anbringorgan 18 aufsteckbar ausgebildet ist. Im aufgesteckten und/oder eingeschobenen Zustand der Rückenlehne 16 am Anbringorgan 18 ist die Rückenlehne 16 vorteilhafterweise am Sitzgestell 9 fixiert.

Beispielsweise ist an der Rückenlehne 16 ein Anbindungsorgan 17 vorhanden, an welchem eine Komponente eines Gurtsystems befestigbar ist. Das Anbindungsorgan 17 ist vorteilhafterweise unabhängig von einer Ausbildungsvariante der Sitzgestelle 3, 6 bis 8 an der jeweiligen Rückenlehne vorhanden.

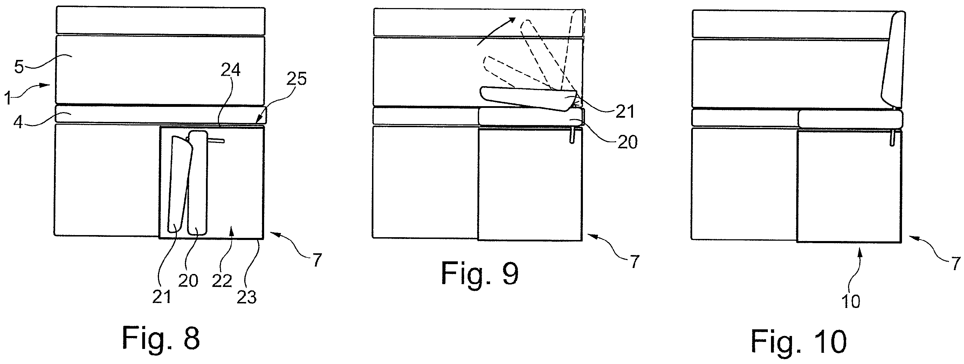

In der zweiten Variante des Sitzgestells 7 sind eine Sitzfläche 20 und eine Rückenlehne 21 insbesondere in einem eingeklappten Zustand in einem Hohlraum 22 eines weiteren Rahmenelements 23 des Sitzgestells 7 verstaubar (Figur 8). Im zur Fahrzeugsitzbank 1 versetzten Zustand des Sitzgestells 7 ist die Sitzfläche 10 insbesondere zusammen mit der Rückenlehne 21 im weiteren Rahmenelement 23 des Sitzgestells 7 verstaubar. Die Sitzfläche 20 und die Rückenlehne 21 sind vorteilhafterweise miteinander verbunden, insbesondere unlösbar. Bevorzugterweise sind die Sitzfläche 20 und die Rückenlehne 21 relativ zueinander schwenkbar vorhanden. Hierdurch ist es ermöglicht, die Sitzfläche 20 zusammen mit der Rückenlehne 21 an ein Rahmenelement 24 und/oder eine Anbringungseinrichtung 25 des Sitzgestells 7 anzuordnen, insbesondere zu befestigen (Figur 9). Vorteilhafterweise ist anschließende die Rückenlehne 21 relativ zur Sitzfläche 20 verschwenkbar, sodass der Fahrzeugsitz 10 realisiert ist (Figur 10). Beispielsweise sind die Sitzfläche 20 und/oder die Rückenlehne 21 in der zweiten Variante mit dem Sitzgestell 7, z.B. mit dem Rahmenelement 23 beweglich gekoppelt.

In der dritten Variante entsprechend dem Sitzgestell 8 ist eine Sitzfläche 26 des Fahrzeugsitzes 11 an einem Rahmenelement 27 des Sitzgestells 8 im versetzten Zustand anordenbar (Figuren 11 bis 14). Außerdem umfasst das Sitzgestell 8 eine Anbringungseinrichtung in Form einer Bewegungseinrichtung 28, welche beispielsweise ein Führungselement 29 umfasst, an welchem eine Rückenlehne 30 ausziehbar, insbesondere verschwenkbar geführt vorhanden ist. Das Führungselement 29 ist zum Beispiel schienenartig ausgebildet. Beispielsweise sind zwei Führungselemente 29 am Sitzgestell 8 vorhanden. Vorteilhafterweise ist die Rückenlehne 30 derart ausziehbar am Führungselement 29 angelenkt, dass die Rückenlehne 30 insbesondere vollständig in einem Hohlraum 31 des Rahmenelements 27 und damit vorteilhafterweise im Sitzgestell 8 verstaubar anordenbar ist. Außerdem ist die Rückenlehne beispielsweise derart ausziehbar am Führungselement 29 angelenkt, dass die Rückenlehne 30 in einer insbesondere einzigen, durchgehenden Bewegung, beispielsweise Schwenkbewegung in eine Funktionsposition bewegbar ist. In der Funktionsposition am Sitzgestell 8 befindet sich die Rückenlehne 30 in einer Sollposition, sodass die Rückenlehne 30 eine Rückenlehne des Fahrzeugsitzes 11 bildet.

### Bezugszeichenliste

- 1: Fahrzeugsitzbank
- 2: Fahrzeugboden
- 3: Sitzgestell
- 4: Sitz- und/oder Liegefläche
- 5: Rückenlehne
- 6 - 8: Sitzgestell
- 9 - 11: Fahrzeugsitz
- 12, 23: Rahmenelement
- 13, 24: Rahmenelement
- 14, 20, 26: Sitzfläche
- 15, 25: Anbringungseinrichtung
- 16, 21, 30: Rückenlehne
- 17: Anbindungsorgan
- 18: Anbringorgan
- 19: Steckelement
- 22: Hohlraum
- 27: Rahmenelement
- 28: Bewegungseinrichtung
- 29: Führungselement
- 30: Rückenlehne
- 31: Hohlraum

## Patentansprüche

1. Fahrzeugsitzbank (1) mit einem Sitzgestell (3, 7 - 8) eines Fahrzeugsitzes (9, 10, 11), wobei das Sitzgestell (3, 7 - 8) ein Rahmenelement (13) für eine Sitzfläche (4, 14), eine Anbringungseinrichtung (15) für eine Rückenlehne (16) und ein Anbindungsorgan (17) für ein Gurtsystem umfasst, wobei das Sitzgestell (3, 7 - 8) als ein bewegliches Sitzgestell (3, 7 - 8) vorhanden und derart ausgebildet ist, unterhalb der Sitzfläche (4, 14) einer Fahrzeugsitzbank (1) versetzbar angeordnet zu sein, sodass durch Versetzen des Sitzgestells (3, 7 - 8) das Sitzgestell (3, 7 - 8) freigestellt werden kann und ein Fahrzeugsitz (9, 10, 11) realisierbar ist, **dadurch gekennzeichnet, dass** die Anbringungseinrichtung (15) für die Rückenlehne (16) am Sitzgestell (3, 7 - 8) aufsteckbar und/oder ansteckbar ist.

2. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Sitzgestell (3, 7 - 8) als eine Art Schublade einer Fahrzeugsitzbank (1), insbesondere einer Fahrzeugseitenbank ausgebildet ist.

3. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Sitzgestell (3, 7 - 8), insbesondere das Rahmenelement (12) für die Sitzfläche (14) des Sitzgestells (3, 7 - 8), kastenförmig ausgebildet ist.

4. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Sitzgestell (3, 7 - 8) in einer Weise ausgebildet ist, dass sich nach einem Versetzen des an die Fahrzeugsitzbank (1) angeordneten Sitzgestells (3, 7 - 8), eine Sitzfläche (14) und eine Rückenlehne (16) an das Sitzgestell (3, 7 - 8) anordnen lassen, wobei im realisierten Zustand des Fahrzeugsitzes (9) eine Sitzrichtung des Fahrzeugsitzes (9) in Fahrtrichtung F eines Fahrzeugs, welches den Fahrzeugsitz (9) umfasst, ausgerichtet ist.

5. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Sitzgestell (3, 7 - 8) in einer Weise ausgebildet ist, dass die Anbringungseinrichtung (15) für die Rückenlehne (16), das Anbindungsorgan (17) für das Gurtsystem, die Sitzfläche (14), die Rückenlehne (16) und/oder das Gurtsystem darin verstaubar sind.

6. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Sitzgestell (3, 7 - 8) derart ausgebildet ist, dass das Sitzgestell (3, 7 - 8) im angeordneten und versetzten Zustand an der Fahrzeugsitzbank (1) in einer Weise vorhanden ist, dass eine Sitz- und/oder Liegefläche (4) der Fahrzeugsitzbank (1) vergrößert ist.

7. Fahrzeugsitzbank (1) mit einem Sitzgestell (3, 7 - 8) eines Fahrzeugsitzes (9, 10, 11), nach einem der vorangegangenen Ansprüche, **dadurch gekennzeichnet, dass** das Rahmenelement für die Sitzfläche ausschwenkbar am Sitzgestell (3, 7 - 8) vorhanden ist.

8. Fahrzeugsitzbank (1) mit einem Sitzgestell (3, 7 - 8) eines Fahrzeugsitzes, nach einem der vorangegangenen Ansprüche, **dadurch gekennzeichnet, dass** das Sitzgestell (3, 7 - 8) ein Verankerungselement aufweist, um das Sitzgestell (3, 7 - 8) im versetzten Zustand an der Fahrzeugsitzbank (1) und/oder am Fahrzeug zu fixieren.

9. Fahrzeugsitzbank (1) mit einem Sitzgestell (3, 7 - 8) eines Fahrzeugsitzes nach einem der vorangegangenen Ansprüche, **dadurch gekennzeichnet, dass** das Sitzgestell (3, 7 - 8) in einer Richtung senkrecht und/oder parallel zur Sitzrichtung S der Fahrzeugsitzbank (1) ausziehbar vorhanden ist.

10. Fahrzeugsitzbank (1) mit einem Sitzgestell (3, 7 - 8) eines Fahrzeugsitzes nach dem vorangegangenen Anspruch 1, **dadurch gekennzeichnet, dass** die Fahrzeugsitzbank (1) in einer Weise ausgebildet ist, dass statt dem Sitzgestell (3, 7 - 8) die Fahrzeugsitzbank (1) versetzbar vorhanden ist.

## Claims

1. Vehicle seat bench (1) with a seat frame (3, 7-8) of a vehicle seat (9, 10, 11), the seat frame (3, 7-8) comprising a frame element (13) for a sitting surface (4, 14), an attachment device (15) for a backrest (16) and a connecting element (17) for a belt system, the seat frame (3, 7-8) being present as a movable seat frame (3, 7-8) and configured in such a way as to be arranged displaceably below the sitting surface (4, 14) of a vehicle seat bench (1), such that, by displacing the seat frame (3, 7-8), the seat frame (3, 7-8) can be released and a vehicle seat (9, 10, 11) can be created, **characterised in that**
the attachment device (15) for the backrest (16) is attachable to and/or onto the seat frame (3, 7-8).

2. Vehicle seat bench (1) with a seat frame (3, 7-8) of a vehicle seat (9, 10, 11), according to the preceding claim, **characterised in that** the seat frame (3, 7-8) is configured as a type of drawer of a vehicle seat bench (1), in particular of a vehicle side bench.

3. Vehicle seat bench (1) with a seat frame (3, 7-8) of a vehicle seat (9, 10, 11) according to one of the preceding claims, **characterised in that** the seat frame (3, 7-8), in particular the frame element (12) for the sitting surface (14) of the seat frame (3, 7-8), is box-shaped.

4. Vehicle seat bench (1) with a seat frame (3, 7-8) of a vehicle seat (9, 10, 11) according to one of the preceding claims, **characterised in that** the seat frame (3, 7-8) is configured in such a way that, once the seat frame (3, 7-8) arranged on the vehicle seat bench (1) has been displaced, a sitting surface (14) and a backrest (16) can be arranged on the seat frame (3, 7-8), wherein, in the created state of the vehicle seat (9), a seating direction of the vehicle seat (9) is oriented in the direction of travel F of a vehicle which comprises the vehicle seat (9).

5. Vehicle seat bench (1) with a seat frame (3, 7-8) of a vehicle seat (9, 10, 11) according to one of the preceding claims, **characterised in that** the seat frame (3, 7-8) is configured in such a way that the attachment device (15) for the backrest (16), the connecting element (17) for the belt system, the sitting surface (14), the backrest (16) and/or the belt system can be stowed therein.

6. Vehicle seat bench (1) with a seat frame (3, 7-8) of a vehicle seat (9, 10, 11) according to one of the preceding claims, **characterised in that** the seat frame (3, 7-8) is configured such that the seat frame (3, 7-8) is present in the arranged and displaced state on the vehicle seat bench (1) in such a way that a sitting and/or lying surface (4) of the vehicle seat bench (1) is enlarged.

7. Vehicle seat bench (1) with a seat frame (3, 7-8) of a vehicle seat (9, 10, 11) according to one of the preceding claims, **characterised in that** the frame element for the sitting surface can be swivelled out on the seat frame (3, 7-8).

8. Vehicle seat bench (1) with a seat frame (3, 7-8) of a vehicle seat according to one of the preceding claims, **characterised in that** the seat frame (3, 7-8) has an anchoring element for securing the seat frame (3, 7-8) in the displaced state on the vehicle bench (1) and/or on the vehicle.

9. Vehicle seat bench (1) with a seat frame (3, 7-8) of a vehicle seat according to one of the preceding claims, **characterised in that** the seat frame (3, 7-8) is extendable in a direction perpendicular and/or parallel to the seat direction S of the vehicle seat bench (1).

10. Vehicle seat bench (1) with a seat frame (3, 7-8) of a vehicle seat according to the preceding claim 1, **characterised in that** the vehicle seat bench (1) is configured in such a way that, instead of the seat frame (3, 7-8), it is the vehicle seat bench (1) which is displaceable.

## Revendications

1. Banquette de siège de véhicule (1) comportant un cadre de siège (3, 7 à 8) d'un siège de véhicule (9, 10, 11), le cadre de siège (3, 7 à 8) comprenant un élément-cadre (13) pour une surface d'assise (4, 14), un dispositif de montage (15) pour un dossier (16) et un élément de liaison (17) pour un système de ceinture, le cadre de siège (3, 7 à 8) étant conçu sous la forme de cadre de siège (3, 7 à 8) mobile et de manière à pourvoir être disposé sous la surface d'assise (4, 14) d'une banquette de siège de véhicule (1) de telle sorte que, par déplacement du cadre d'assise (3, 7 à 8), le cadre de siège (3, 7 à 8) peut être libéré et qu'un siège de véhicule (9, 10, 11) peut être réalisé, **caractérisée en ce que**
le dispositif de montage (15) pour le dossier (16) sur le cadre d'assise (3, 7 à 8) peut être emboîté et/ou inséré.

2. Banquette de siège de véhicule (1) comportant un cadre de siège (3, 7 à 8) d'un siège de véhicule (9, 10, 11) selon l'une quelconque des revendications précédentes, **caractérisée en ce que** le cadre de siège (3, 7 à 8) est conçu sous la forme de tiroir d'une banquette de siège de véhicule (1), en particulier de banquette latérale de véhicule.

3. Banquette de siège de véhicule (1) comportant un cadre de siège (3, 7 à 8) d'un siège de véhicule (9, 10, 11) selon l'une quelconque des revendications précédentes, **caractérisée en ce que** le cadre de siège (3, 7 à 8), en particulier l'élément-cadre (12) pour la surface d'assise (14) du cadre d'assise (3, 7 à 8), est conçu sous la forme de caisson.

4. Banquette de siège de véhicule (1) comportant un cadre de siège (3, 7 à 8) d'un siège de véhicule (9, 10, 11) selon l'une quelconque des revendications précédentes, **caractérisée en ce que** le cadre de siège (3, 7 à 8) est conçu de manière à ce qu'une surface d'assise (14) et un dossier (16) puissent être disposés sur le cadre de siège (3, 7 à 8) après un déplacement du cadre de siège (3, 7 à 8) disposé sur la banquette de siège de véhicule (1), une direction d'assise du siège de véhicule (9) pouvant être alignée, dans l'état réalisé du siège de véhicule (9), dans la direction de circulation F d'un véhicule, lequel comprend le siège de véhicule (9).

5. Banquette de siège de véhicule (1) comportant un cadre de siège (3, 7 à 8) d'un siège de véhicule (9, 10, 11) selon l'une quelconque des revendications précédentes, **caractérisée en ce que** le cadre de siège (3, 7 à 8) est conçu de telle sorte que le dispositif de montage (15) pour le dossier (16), l'élément de liaison (17) pour le système de ceinture, la surface d'assise (14), le dossier (16) et/ou le système de ceinture peuvent être disposés à l'intérieur.

6. Banquette de siège de véhicule (1) comportant un cadre de siège (3, 7 à 8) d'un siège de véhicule (9, 10, 11) selon l'une quelconque des revendications précédentes, **caractérisée en ce que** le cadre de siège (3, 7 à 8) est conçu de telle sorte que le cadre de siège (3, 7 à 8), dans l'état rangé et décalé, est présent sur la banquette de siège de véhicule (1) de telle sorte qu'une surface d'assise et/ou de couchage (4) de la banquette de siège de véhicule (1) est agrandie.

7. Banquette de siège de véhicule (1) comportant un cadre de siège (3, 7 à 8) d'un siège de véhicule (9, 10, 11) selon l'une quelconque des revendications précédentes, **caractérisée en ce que** l'élément-cadre pour la surface d'assise peut être pivoté vers l'extérieur sur le cadre de siège (3, 7 à 8).

8. Banquette de siège de véhicule (1) comportant un cadre de siège (3, 7 à 8) d'un siège de véhicule selon l'une quelconque des revendications précédentes, **caractérisée en ce que** le cadre de siège (3, 7 à 8) comporte un élément d'ancrage pour fixer le cadre de siège (3, 7 à 8), dans l'état décalé, à la banquette de siège de véhicule (1) et/ou au véhicule.

9. Banquette de siège de véhicule (1) comportant une cadre de siège (3, 7 à 8) d'un siège de véhicule selon l'une quelconque des revendications précédentes, **caractérisée en ce que** le cadre de siège (3, 7 à 8) est extensible dans une direction perpendiculaire et/ou parallèle à la direction d'assise S de la banquette de siège de véhicule (1).

10. Banquette de siège de véhicule (1) comportant un cadre de siège (3, 7 à 8) d'un siège de véhicule selon la revendication précédente 1, **caractérisée en ce que** la banquette de siège de véhicule (1) est conçue de telle sorte que, au lieu du cadre de siège (3, 7 à 8), la banquette de siège de véhicule (1) peut être déplacée.
